# FASCICULE DE BREVET EUROPEEN

(11) **EP 3 639 344 B1**
(45) Date de publication et mention de la délivrance du brevet: **14.10.2026**
(21) Numéro de dépôt: 18728178.7
(22) Date de dépôt: 07.06.2018
(51) Int. Cl.: H02J 7/50, H02J 7/56, B64D 41/00, H01M 10/44

(54) **PROCÉDÉ DE CHARGE DE BATTERIES POUR UN AÉRONEF ET SYSTÈME DE STOCKAGE D'ÉNERGIE ÉLECTRIQUE**
VERFAHREN ZUM LADEN VON BATTERIEN FÜR EIN FLUGZEUG UND SYSTEM ZUM SPEICHERN VON STROM
METHOD FOR CHARGING BATTERIES FOR AN AIRCRAFT AND SYSTEM FOR STORING ELECTRICAL ENERGY

(30) Priorité: 14.06.2017 FR 1755362
(43) Date de publication de la demande: 22.04.2020
(73) Titulaire: Safran Electrical & Power, 31702 Blagnac Cedex (FR)
(72) Inventeur: KREMER, Anthony, 93100 Montreuil (FR); CHEROUVRIER, Guillaume, 93100 Montreuil (FR)
(74) Mandataire: Casalonga
(86) Numéro de dépôt international: PCT/EP2018/064978
(87) Numéro de publication internationale: WO 2018/228908

(56) Documents cités:
- EP-A1- 0 652 620
- EP-A1- 2 816 704
- EP-A1- 3 062 363
- WO-A1-2014/073281

## Description

L'invention concerne un procédé de charge de batteries pour un aéronef et un système de stockage d'énergie électrique pour un aéronef comprenant un ensemble de batteries.

Une batterie est généralement formée d'une ou de plusieurs cellules aptes à stocker et à délivrer une énergie électrique.

Il est connu de charger plusieurs batteries en série. Cependant, ce type de configuration présente généralement des batteries dont la tension en circuit ouvert entre la cellule la plus chargée appartenant à une batterie et la cellule la moins chargée requiert un équilibrage de toutes les cellules, y compris sur les cellules des autres batteries.

Le document WO 2014/073281 décrit un dispositif permettant d'égaliser la tension d'une pluralité de batteries raccordées en série.

Il ne s'agit pas à proprement parler d'un dispositif de charge de batterie mais d'égaliseur de tension par utilisation d'un transformateur. En outre, les batteries sont raccordées en série et non en parallèle.

De plus, en fonction du nombre de batteries en série à charger et de la tension en circuit ouvert demandée, il est parfois nécessaire d'avoir un chargeur spécifique pour chaque niveau de tension en circuit ouvert voulue. Ceci augmente significativement les coûts de développement.

Il a été proposé une autre configuration dans laquelle les batteries sont reliées en parallèle entre elles.

Pour ce type de configuration, il est connu de réaliser d'abord la connexion des batteries puis de charger lesdites batteries jusqu'à ce qu'une batterie ou une cellule de la batterie soit chargée.

Cependant, le chargement desdites batteries n'est pas contrôlé de manière individuelle et indépendante. Il arrive donc que les batteries ne soient pas chargées à leur niveau maximum lorsque la charge de l'ensemble des batteries est interrompue suite à la charge complète d'une seule cellule d'une batterie chargée.

Il arrive au contraire que la charge soit poursuivie entraînant des surcharges pour les cellules d'une ou de plusieurs batteries les plus chargées. Cela entraîne des dégradations définitives desdites cellules et des problèmes de sécurité.

Il existe donc un besoin de fournir un procédé de charge de batteries pour un aéronef efficace et ne présentant pas les inconvénients précités.

Selon un premier aspect, tel que défini dans la revendication indépendante 1, l'invention a pour objet un procédé de charge de batteries pour un aéronef comprenant les étapes dans lesquelles :
Etape A - on dispose un ensemble d'au moins trois batteries connectées en parallèle, chaque batterie ayant une tension de charge maximale propre, ledit ensemble étant relié à un unique chargeur de batterie ;
Etape B - on connecte une première batterie au chargeur de batterie, ladite batterie ayant la tension en circuit ouvert la plus faible des tensions en circuit ouvert de l'ensemble des batteries ;
Etape C - on envoie dans la première batterie une consigne de courant ayant une valeur augmentant pendant un premier intervalle de temps puis constante pendant un deuxième intervalle de temps de sorte à augmenter la tension en circuit ouvert de la batterie jusqu'à être sensiblement égale à la tension en circuit ouvert d'une deuxième batterie qui est la tension en circuit ouvert la plus faible des tensions en circuit ouvert de l'ensemble des batteries ;
Etape D - on connecte la deuxième batterie au chargeur ;
Etape E - on envoie dans les première et deuxième batteries une deuxième consigne de courant de sorte à augmenter la tension en circuit ouvert desdites batteries jusqu'à être sensiblement égale à la tension en circuit ouvert d'une autre batterie qui est la tension en circuit ouvert la plus faible des tensions en circuit ouvert de l'ensemble des batteries ;
Etape F - on répète les étapes D et E jusqu'à ce que chaque batterie ait atteint la tension de charge maximale propre à ladite batterie ;
Etape G- on déconnecte du chargeur chaque batterie dont la nouvelle tension est supérieure à la tension maximale propre de ladite batterie.

Grâce à l'invention, toutes les cellules de l'ensemble de batteries sont chargées avec un unique chargeur ce qui diminue les coûts. En effet, il est possible d'utiliser un chargeur standard.

En outre, les cellules de chaque batterie étant chargées batterie par batterie, le niveau de protection correspond à celui d'une charge de batterie seule. La sécurité de chargement de l'ensemble des batteries est donc conservée.

De plus, le temps de charge de l'ensemble des batteries est proche de celui d'une seule batterie puisque les cellules de chaque batterie sont chargées de la tension en circuit ouvert la plus basse des tensions en circuit ouvert à la tension en circuit ouvert propre la plus haute des tensions en circuit ouvert.

L'invention permet également un gain de temps tout en limitant les pics de courant lors de la connexion initiale en cas de connexion de deux batteries présentant des tensions en circuit ouvert différentes. De manière générale, la gestion du courant dans chaque batterie est mieux contrôlée.

Le fait de n'avoir qu'un seul chargeur permet aussi de limiter le nombre de connexions sur chaque batterie, ce qui entraîne des gains de coûts et de masse des batteries.

Selon des modes particuliers de l'invention, le procédé de l'invention peut comprendre l'une ou plusieurs des caractéristiques suivantes prises isolément ou selon toutes les combinaisons possibles :
- préalablement ou durant l'étape A, on détermine la tension en circuit ouvert de chacune des batteries ;
- les tensions en circuit ouvert de l'ensemble des batteries sont identiques ;
- l'ensemble de batteries comporte des batteries identiques ou différentes ;
- un élément de communication est apte à faire l'interface de communication entre l'ensemble de batteries et le chargeur ;
- l'élément de communication est une carte électronique appartenant à une batterie ou étant extérieure à l'ensemble de batteries ;
- la connexion et la déconnexion de chaque batterie sont réalisées à l'aide d'un commutateur dédié à ladite batterie ;
- au cours de l'étape C, la consigne de courant est une valeur constante pendant un intervalle de temps prédéfini ou une valeur augmentant pendant un premier intervalle de temps puis constante pendant un deuxième intervalle de temps ;
- l'étape G est réalisée à l'issue de l'étape E.

Telle que définie par la revendication indépendante 8, l'invention a également pour objet un système de stockage d'énergie électrique pour un aéronef comprenant un ensemble de batteries connectées en parallèle, chacune comprenant une pluralité de cellules et étant associée à un commutateur spécifique, un chargeur connecté à chacune des batteries par l'intermédiaire dudit commutateur et un élément de communication pour assurer la communication entre les batteries et le chargeur, ledit chargeur étant configuré pour charger lesdites cellules desdites batteries par le procédé de charge selon l'invention.

D'autres buts, caractéristiques et avantages de l'invention apparaîtront à la lecture de la description suivante, donnée uniquement à titre d'exemple non limitatif et faite en référence aux dessins annexés sur lesquels :

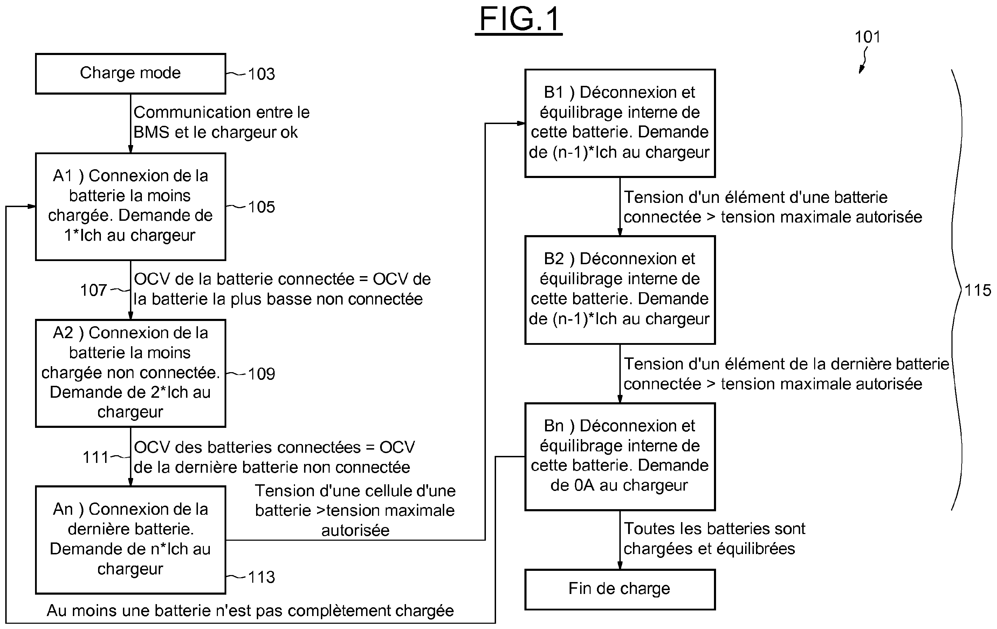

- la figure 1 est un schéma d'un mode de réalisation du procédé selon l'invention;
- la figure 2 est un schéma d'un premier mode de réalisation d'un ensemble de stockage selon l'invention dans lequel les batteries sont initialement configurées pour une charge en parallèle ;

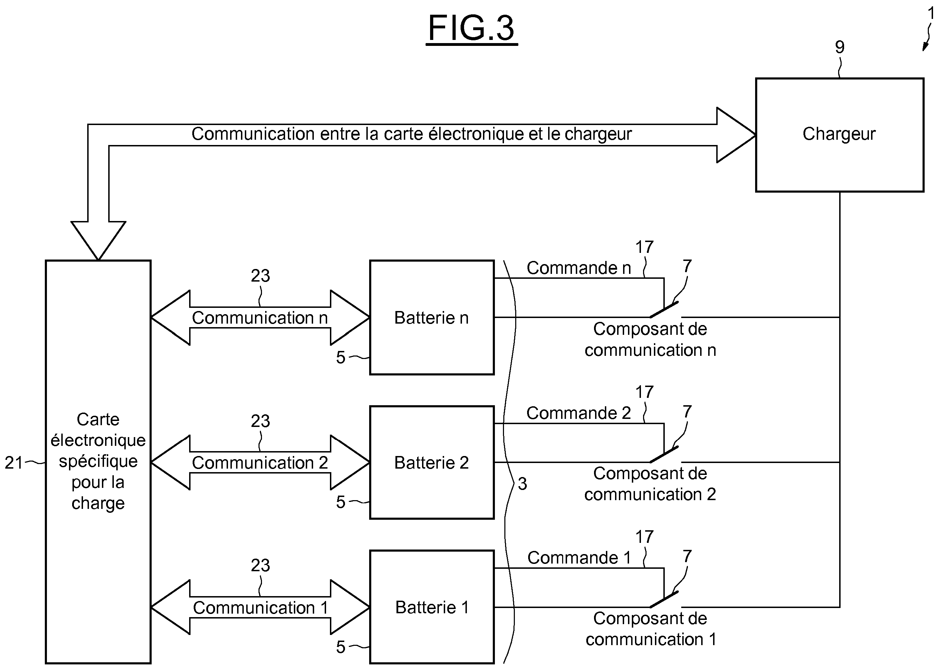

- la figure 3 est un schéma d'un second mode de réalisation d'un ensemble de stockage selon l'invention dans lequel les batteries, de type li-ion, sont non initialement configurées pour une charge en parallèle ;
- la figure 4 est un diagramme schématique d'un premier exemple de profil de la consigne de courant employée dans le procédé de l'invention ;
- la figure 5 est un diagramme schématique d'un deuxième exemple de profil de la consigne de courant employée dans le procédé de l'invention.

Le système de stockage d'énergie électrique de l'invention permet de stocker de l'énergie électrique pour alimenter des charges dans un aéronef.

Comme illustré sur les figures, le système de l'invention 1 comprend un ensemble de batteries 3 connectées en parallèle, chacune 5 étant associée à un commutateur 7 spécifique, un chargeur 9 connecté à chacune des batteries 5 par l'intermédiaire dudit commutateur 7 et un élément de communication pour assurer la communication entre les batteries 5 et le chargeur 9, lesdites batteries 5 comprenant une ou plusieurs cellules chargées par le procédé de charge selon l'invention qui est détaillé dans la suite de la description.

L'ensemble des batteries 3 peut de manière avantageuse comprendre des batteries 5 ayant des cellules identiques ou différentes, à savoir des cellules de nature et/ou un nombre de cellules identiques ou différents.

Le chargeur 9 peut être un chargeur standard de protocole CHAdeMO. Ledit protocole comprend une communication par analogique et CAN et un séquencement de fonctionnement dédié.

L'élément de communication est apte à faire l'interface de communication entre l'ensemble de batteries 3 et le chargeur 9. Ledit élément de communication permet ainsi de récupérer toutes les informations des batteries 5, notamment des cellules appartenant à chaque batterie, utiles au chargeur 9 pour donner une information globale, voire une demande, audit chargeur 9.

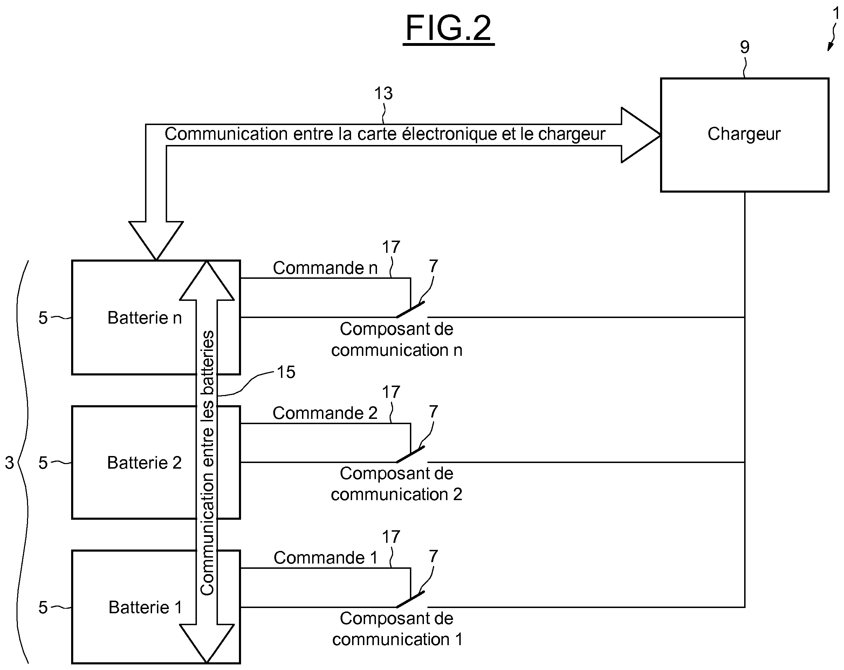

A cet effet, l'élément de communication peut être une carte électronique appartenant à une batterie (voir figure 2). Dans ce cas, le chargeur 9 communique, comme indiqué par la flèche 13, avec une unique batterie 5 de l'ensemble de batteries. Ladite unique batterie et les autres batteries sont également capables de communiquer entre elles, comme indiqué par la flèche 15, pour échanger les données de l'état de charge de chaque batterie au chargeur 9, en particulier du niveau de la valeur de la tension en circuit ouvert.

Selon une variante, l'élément de communication peut être une carte électronique 21 extérieure à l'ensemble de batteries 3. Ceci est particulièrement avantageux dans le cas où aucune batterie employée n'est capable de communiquer directement avec les autres batteries, en particulier pour les batteries non conçues pour une charge en parallèle. La carte électronique 21 et chaque batterie 5 peuvent être reliées par un câblage de communication tel qu'un bus de communication, ou bien, si la batterie n'est pas équipée de bus de communication, d'un ensemble des tensions analogiques et d'une commande du composant de commutation 7.

Dans ce cas, ladite carte 21 est apte à communiquer, comme indiqué par la flèche 23, avec chacune des batteries 5 pour donner les données de l'état de charge de chaque batterie 5 au chargeur 9, en particulier les données liées au niveau de la tension en circuit ouvert.

La connexion et la déconnexion de chaque batterie 5 au chargeur 9 peuvent être réalisées à l'aide d'un commutateur 7 spécifique. A titre d'exemple de commutateur 7, on peut citer des contacteurs, des Solid State Power Controllers dits « SSPC » ou des relais.

Chaque batterie 5 peut également comprendre de manière avantageuse une commande 17 de sorte à connecter ou déconnecter le commutateur 7.

La commande 17 peut être sous la forme d'un algorithme qui permet l'optimisation de la charge de l'ensemble 3 des batteries en connectant ou en isolant chaque batterie 5 du chargeur 9. Des données peuvent ainsi être communiquées avec le chargeur 9 en temps réel, comme la valeur du courant de charge.

Chaque batterie peut être apte à gérer ses propres protections permettant ainsi un gain d'opération logique. Si l'une des batteries présente une anomalie, il est possible que ladite batterie se déconnecte d'elle-même et n'empêche donc pas les autres batteries de finir leur cycle de charge.

Le procédé de l'invention 101 est un procédé de charge des batteries du système de l'invention comprenant les étapes dans lesquelles :
Etape A 103 - on dispose un ensemble de batteries 3 connectées en parallèle, chaque batterie 5 ayant une tension de charge maximale propre, ledit ensemble 3 étant relié à un unique chargeur de batterie 9 ;
Etape B 105 - on connecte une première batterie 5 au chargeur 9 de batterie, ladite batterie 5 ayant la tension en circuit ouvert la plus faible des tensions en circuit ouvert de l'ensemble des batteries 3 ;
Etape C 107 - on envoie dans la première batterie 5 une consigne de courant de sorte à augmenter la tension en circuit ouvert de la batterie 5 jusqu'à être sensiblement égale à la tension en circuit ouvert d'une deuxième batterie 5 qui est la tension en circuit ouvert la plus faible des tensions en circuit ouvert de l'ensemble des batteries 3 ;
Etape D 109 - on connecte la deuxième batterie 5 au chargeur 9;
Etape E 111- on envoie dans les première et deuxième batteries 5 une deuxième consigne de courant de sorte à augmenter la tension en circuit ouvert des batteries 5 jusqu'à être sensiblement égale à la tension en circuit ouvert d'une autre batterie 5 qui est la tension en circuit ouvert la plus faible des tensions en circuit ouvert de l'ensemble des batteries ;
Etape F 113- on répète les étapes D et E jusqu'à ce que chaque batterie ait atteint la tension maximale propre à ladite batterie ;
Etape G 115- on déconnecte du chargeur 9 chaque batterie 5 dont la nouvelle tension est supérieure à la tension maximale propre de ladite batterie.

La tension en circuit ouvert de chaque batterie correspond à la tension des cellules si aucune contrainte de courant durant un temps long n'est appliquée.

Selon un mode de réalisation, les tensions en circuit ouvert propres de l'ensemble des batteries 3 sont identiques. Ainsi, on peut utiliser des batteries de nature différentes mais de tension en circuit ouvert propre identique.

Durant l'étape A 103, on dispose un ensemble de batteries 3 connectées en parallèle, chaque batterie 5 ayant une tension de charge maximale propre, ledit ensemble 3 étant relié à un unique chargeur de batterie 9.

De préférence, préalablement ou pendant à l'étape A 103, on peut déterminer la tension en circuit ouvert de chacune des batteries 5 afin d'estimer le niveau de charge des cellules et ainsi de déterminer si une batterie 5 est chargée. On peut également déterminer l'ordre des batteries 5 à connecter au chargeur 9 en fonction de la valeur de la tension en circuit ouvert. Cette détermination peut être réalisée en utilisant un BMS ou « Battery Management System ».

Durant l'étape B 105, on connecte une première batterie 5 au chargeur 9 de batterie, ladite batterie 5 ayant la tension en circuit ouvert la plus faible des tensions en circuit ouvert de l'ensemble des batteries 3.

Ladite première batterie 5 peut être en communication avec ledit chargeur 9 afin de suivre l'évolution de la tension en circuit ouvert.

Durant l'étape C 107, on envoie dans la première batterie 5 une consigne de courant de sorte à augmenter la tension en circuit ouvert de la batterie 5 jusqu'à être sensiblement égale à la tension en circuit ouvert d'une deuxième batterie 5 qui est la tension en circuit ouvert la plus faible des tensions en circuit ouvert de l'ensemble des batteries 9.

Ainsi les première et deuxième batteries 5 ont sensiblement la même tension en circuit ouvert qui est devenue la tension en circuit ouvert la plus faible des tensions en circuit ouvert déterminées préalablement ou durant l'étape A 103. Grâce à l'élément de communication, le chargeur 9 est informé de la nouvelle valeur de tension en circuit ouvert de la première batterie 5.

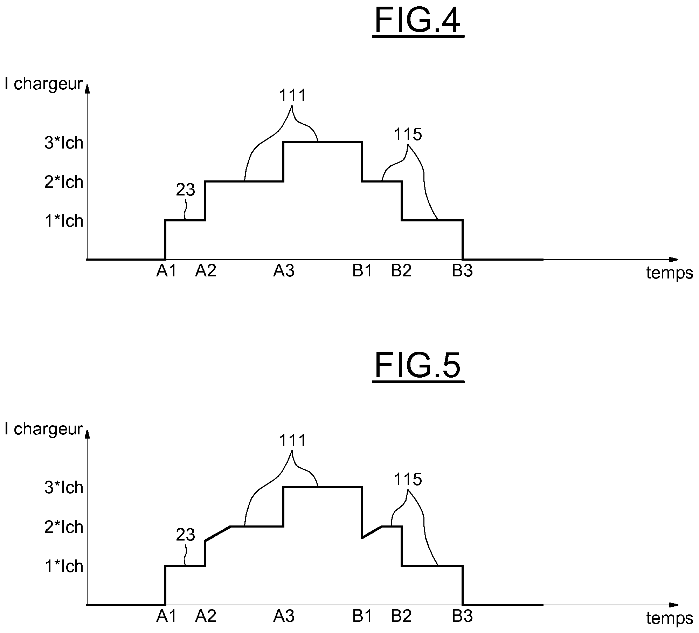

Selon un mode de réalisation représenté sur la figure 4, au cours de l'étape C 107, la consigne de courant a une valeur constante pendant un intervalle de temps prédéfini.

A titre d'exemple, la consigne de courant peut être un courant au maximum sensiblement égal à 100% de la capacité de la batterie ou 1C par batterie connectée, pendant une durée au maximum sensiblement égale à 1h.

Selon une variante représentée à la figure 5, la valeur de la consigne de courant peut augmenter pendant un premier intervalle de temps puis être constante pendant un deuxième intervalle de temps.

Ainsi, la consigne de courant peut être un courant partant d'une valeur sensiblement égale à 80% de la capacité de la batterie ou 0.8C par batterie connectée et arrivant à une valeur sensiblement égale à 100% de la capacité de la batterie ou 1C par batterie connectée pendant une première durée sensiblement égale à quelques minutes puis être un courant sensiblement égal à la capacité de la batterie ou 1C par batterie connectée, pendant une durée sensiblement égale à 1h.

Durant l'étape D 109, on connecte la deuxième batterie 5 au chargeur 9. Pour ce faire, on peut fermer le commutateur 7 spécifique à la deuxième batterie 5. Ainsi, les première et deuxième batteries 5 connectées au chargeur 9 ont une tension en circuit ouvert sensiblement identique.

Durant l'étape E 111, on envoie dans les première et deuxième batteries 5 une deuxième consigne de courant de sorte à augmenter la tension en circuit ouvert des batteries 5 jusqu'à être sensiblement égale à la tension en circuit ouvert d'une autre batterie 5 qui est la tension en circuit ouvert la plus faible des tensions en circuit ouvert de l'ensemble des batteries.

Ainsi à l'issue de l'étape E 111, les première et deuxième batteries 5 ont sensiblement la même tension en circuit ouvert que l'autre batterie 5 qui est devenue la tension en circuit ouvert la plus faible des tensions en circuit ouvert déterminées préalablement ou durant l'étape A 103. Cette information peut être donnée au chargeur 9 par l'intermédiaire de l'élément de communication.

Comme précédemment, la consigne de courant envoyée durant l'étape E 111 est une valeur constante pendant un intervalle de temps prédéfini (figure 4) ou augmente pendant un premier intervalle de temps puis est constante pendant un deuxième intervalle de temps (figure 5). Ce dernier profil de consigne est particulièrement avantageux lorsque les résistances internes des batteries 5 sont déséquilibrées. La rampe est ainsi choisie de sorte à envoyer un courant de consigne légèrement inférieur à la consigne de courant maximale finale qui restera constante pendant un intervalle de temps prédéfini.

La consigne de courant peut être prédéterminée ou adaptée en fonction du nombre de batteries 5 connectées audit chargeur 9 ainsi qu'en fonction du nombre de cycles fait durant la charge complète de ladite ou desdites batteries 5.

Durant l'étape F 113, on recommence les étapes D 109 et E 111 jusqu'à ce que chaque batterie 5 atteigne la tension maximale propre.

Durant l'étape G 115, on déconnecte du chargeur 9 chaque batterie 5 dont au moins une cellule a atteint sa tension maximale propre. Ainsi, de manière avantageuse, on s'assure que les cellules de chaque batterie se chargent à une tension en circuit ouvert qui reste inférieure ou égale à la tension admissible par les cellules sans endommager ces dernières.

La tension en circuit ouvert est employée pour la première connexion de chaque batterie. Par la suite, la tension utilisée est une tension mesurée directement.

La déconnexion peut se faire en ouvrant le ou les commutateurs 7 de ladite ou desdites batteries à déconnecter.

La déconnexion a pour effet de permettre l'équilibrage de chaque batterie déconnectée 5, en particulier des éléments de cette batterie, tels que chacune des branches série des batteries. La ou les batteries 5 s'équilibrent de manière autonome. Il est donc avantageusement possible d'utiliser un algorithme d'équilibrage connu ou au contraire spécifique à l'utilisation sans avoir à modifier l'architecture du système 1 de l'invention ou de chargeur 9.

Pour ce faire, la batterie est laissée déconnectée du chargeur 9 sans aucun courant de charge pour ladite batterie. Les autres batteries n'ayant pas commencé leur phase d'équilibrage continuent à être chargées.

L'étape G peut être réalisée à l'issue de l'étape E. Autrement dit, la déconnexion de la ou des batteries 5 du chargeur 9 peut intervenir entre les différents cycles d'envoi de consigne de courant ou être réalisée à la fin du processus de charge de l'ensemble 3 de batteries en ouvrant simultanément tous les commutateurs 7.

L'invention permet ainsi de :
- de gérer de façon séquentielle les batteries et donc de limiter le vieillissement de chaque batterie par une meilleure répartition des courants dans chaque batterie et une optimisation du temps de charge ;
- de n'utiliser qu'un unique chargeur pour l'ensemble de batteries, qui peut être un chargeur standard, afin de recharger simultanément les batteries du système de l'invention, tout en gardant le même niveau de protection que pour une charge de batterie seule ;
- de gagner du temps, de gérer la connexion initiale en limitant les pics de courant dans les batteries en cas de connexion de deux batteries à différentes tensions, ainsi que la gestion du courant dans chaque batterie ;
- de limiter le nombre de connexions, et donc d'avoir des gains de coût et de masse.

## Revendications

1. Procédé (101) de charge de batteries pour un aéronef comprenant les étapes dans lesquelles :
Etape A (103) - on dispose un ensemble (3) d'au moins trois batteries connectées en parallèle, chaque batterie (5) ayant une tension de charge maximale propre, ledit ensemble (3) étant relié à un unique chargeur (9) de batterie ;
Etape B (105) - on connecte une première batterie (5) au chargeur (9) de batterie, ladite batterie (5) ayant la tension en circuit ouvert la plus faible des tensions en circuit ouvert de l'ensemble (3) des batteries ;
Etape C (107)-on envoie dans la première batterie (5) une consigne de courant ayant une valeur augmentant pendant un premier intervalle de temps puis constante pendant un deuxième intervalle de temps de sorte à augmenter la tension en circuit ouvert de la batterie (5) jusqu'à être sensiblement égale à la tension en circuit ouvert d'une deuxième batterie (5) qui est la tension en circuit ouvert la plus faible des tensions en circuit ouvert de l'ensemble (3) des batteries ;
Etape D (109)-on connecte la deuxième batterie (5) au chargeur (9) ;
Etape E (111) - on envoie dans les première et deuxième batteries (5) une deuxième consigne de courant de sorte à augmenter la tension en circuit ouvert desdites batteries (5) jusqu'à être sensiblement égale à la tension en circuit ouvert d'une autre batterie (5) qui est la tension en circuit ouvert la plus faible des tensions en circuit ouvert de l'ensemble (3) des batteries ;
Etape F (113) - on répète les étapes D (109) et E (111) jusqu'à ce que chaque batterie ait atteint la tension maximale propre à ladite batterie ;
Etape G (115) - on déconnecte du chargeur (9) chaque batterie (5) dont la nouvelle tension est supérieure à la tension maximale propre de ladite batterie (5).

2. Procédé (101) selon la revendication précédente, dans lequel, préalablement ou durant l'étape A (103), on détermine la tension en circuit ouvert de chacune des batteries (5).

3. Procédé (101) selon la revendication 1 ou 2, dans lequel les tensions en circuit ouvert de l'ensemble (3) des batteries sont identiques.

4. Procédé (101) selon l'une quelconque des revendications précédentes, dans lequel un élément de communication est apte à faire l'interface de communication entre l'ensemble (3) de batteries et le chargeur (9).

5. Procédé (101) selon la revendication précédente, dans lequel l'élément de communication est une carte électronique appartenant à une batterie (5) ou étant extérieure à l'ensemble (3) de batteries.

6. Procédé (101) selon l'une quelconque des revendications précédentes, dans lequel la connexion et la déconnexion de chaque batterie (5) sont réalisées à l'aide d'un commutateur dédié à ladite batterie (5).

7. Procédé (101) selon l'une quelconque des revendications précédentes, dans lequel l'étape G (115) est réalisée à l'issue de l'étape E (111).

8. Système de stockage d'énergie électrique (1) pour un aéronef comprenant un ensemble de batteries (3) connectées en parallèle, chacune comprenant une pluralité de cellules et étant associée à un commutateur spécifique (7), un chargeur (9) connecté à chacune des batteries (5) par l'intermédiaire dudit commutateur (7) et un élément de communication pour assurer la communication entre les batteries (5) et le chargeur (9), ledit chargeur étant configuré pour charger lesdites cellules desdites batteries (5) par le procédé (101) de charge selon l'une quelconque des revendications précédentes.

## Patentansprüche

1. Verfahren (101) zum Laden von Batterien für ein Luftfahrzeug, umfassend die Schritte:
Schritt A (103) - Bereitstellen einer Gesamtheit (3) aus mindestens drei parallel geschalteten Batterien, wobei jede Batterie (5) eine eigene maximale Ladespannung aufweist, wobei die Gesamtheit (3) mit einem einzigen Batterieladegerät (9) verbunden ist;
Schritt B (105) - Anschließen einer ersten Batterie (5) an das Batterieladegerät (9), wobei die Batterie (5) die niedrigste Leerlaufspannung der Leerlaufspannungen der Gesamtheit (3) der Batterien aufweist;
Schritt C (107) - Senden eines Stromsollwerts in die erste Batterie (5), dessen Wert während eines ersten Zeitintervalls steigt und dann während eines zweiten Zeitintervalls konstant ist, so dass die Leerlaufspannung der Batterie (5) steigt, bis sie im Wesentlichen gleich der Leerlaufspannung einer zweiten Batterie (5) ist, die die niedrigste Leerlaufspannung der Leerlaufspannungen der Gesamtheit (3) der Batterien ist;
Schritt D (109) - Anschließen der zweiten Batterie (5) an das Ladegerät (9);
Schritt E (111) - Senden eines zweiten Stromsollwerts in die erste und zweite Batterie (5), so dass die Leerlaufspannung der Batterien (5) steigt, bis sie im Wesentlichen gleich der Leerlaufspannung einer anderen Batterie (5) ist, die die niedrigste Leerlaufspannung der Leerlaufspannungen der Gesamtheit (3) der Batterien ist;
Schritt F (113) - Wiederholen der Schritte D (109) und E (111), bis jede Batterie die für diese Batterie eigene maximale Spannung erreicht hat;
Schritt G (115) - Trennen jeder Batterie (5), deren neue Spannung höher als die eigene maximale Spannung der Batterie (5) ist, von dem Ladegerät (9).

2. Verfahren (101) nach vorhergehendem Anspruch, wobei vor oder während des Schritts A (103) die Leerlaufspannung jeder der Batterien (5) bestimmt wird.

3. Verfahren (101) nach Anspruch 1 oder 2, wobei die Leerlaufspannungen der Gesamtheit (3) der Batterien identisch sind.

4. Verfahren (101) nach einem der vorhergehenden Ansprüche, wobei ein Kommunikationselement ausgelegt ist, die Kommunikationsschnittstelle zwischen der Batteriegesamtheit (3) und dem Ladegerät (9) zu bilden.

5. Verfahren (101) nach vorhergehendem Anspruch, wobei das Kommunikationselement eine elektronische Karte ist, die zu einer Batterie (5) gehört oder sich außerhalb der Batteriegesamtheit (3) befindet.

6. Verfahren (101) nach einem der vorhergehenden Ansprüche, wobei das Verbinden und Trennen jeder Batterie (5) mithilfe eines speziellen Schalters für die Batterie (5) erfolgt.

7. Verfahren (101) nach einem der vorhergehenden Ansprüche, wobei Schritt G (115) am Ende von Schritt E (111) durchgeführt wird.

8. Stromspeichersystem (1) für ein Luftfahrzeug, umfassend eine Gesamtheit parallel geschalteter Batterien (3), von denen jede eine Vielzahl von Zellen umfasst und einem speziellen Schalter (7) zugeordnet ist, ein Ladegerät (9), das über den Schalter (7) mit jeder der Batterien (5) verbunden ist, und ein Kommunikationselement, um die Kommunikation zwischen den Batterien (5) und dem Ladegerät (9) sicherzustellen, wobei das Ladegerät zum Laden der Zellen der Batterien (5) durch das Ladeverfahren (101) nach einem der vorhergehenden Ansprüche konfiguriert ist.

## Claims

1. A method (101) for charging batteries for an aircraft comprising the steps of:
Step A (103) - disposing a set (3) of at least three batteries connected in parallel, each battery (5) having a peculiar maximum charging voltage, said set (3) being connected to a single battery charger (9);
Step B (105) - connecting a first battery (5) to the battery charger (9), said battery (5) having the lowest open-circuit voltage of the open-circuit voltages of the set (3) of batteries;
Step C (107) - sending into the first battery (5) a current setpoint having a value increasing in a first time interval and then being constant in a second time interval so as to increase the open-circuit voltage of the battery (5) until it is substantially equal to the open-circuit voltage of a second battery (5) which is the lowest open-circuit voltage of the open-circuit voltages of the set (3) of batteries;
Step D (109) - connecting the second battery (5) to the charger (9);
Step E (111) - sending into the first and second batteries (5) a second current setpoint so as to increase the open-circuit voltage of said batteries (5) until it is substantially equal to the open-circuit voltage of another battery (5) which is the lowest open-circuit voltage of the open-circuit voltages of the set (3) of batteries;
Step F (113) - repeating steps D (109) and E (111) until each battery has reached the maximum voltage peculiar to said battery;
Step G (115) - disconnecting each battery (5) the new voltage of which is greater than the peculiar maximum voltage of said battery (5) from the charger (9).

2. The method (101) according to the preceding claim, wherein, prior to or during step A (103), the open-circuit voltage of each of the batteries (5) is determined.

3. The method (101) according to claim 1 or 2, wherein the open-circuit voltages of the set (3) of batteries are identical.

4. The method (101) according to any one of the preceding claims, wherein a communication element is capable of acting as the communication interface between the set (3) of batteries and the charger (9).

5. The method (101) according to the preceding claim, wherein the communication element is an electronic board belonging to a battery (5) or external to the set (3) of batteries.

6. The method (101) according to any one of the preceding claims, wherein connecting and disconnecting each battery (5) are carried out using a switch dedicated to said battery (5).

7. The method (101) according to any one of the preceding claims, wherein step G (115) is carried out at the end of step E (111).

8. An electric energy storage system (1) for an aircraft comprising a set of batteries (3) connected in parallel, each comprising a plurality of cells and being associated with a specific switch (7), a charger (9) connected to each of the batteries (5) via said switch (7) and a communication element to ensure communication between the batteries (5) and the charger (9), said charger being configured to charge said cells of said batteries (5) by the charging method (101) according to any one of the preceding claims.
